Europäisches Patentamt

European Patent Office

Office européen des brevets

(19)

(11) Veröffentlichungsnummer: **0 111 639**

**A2**

(12) ## EUROPÄISCHE PATENTANMELDUNG

(21) Anmeldenummer: 83109220.0

(22) Anmeldetag: 17.09.83

(51) Int. Cl.³: **E 04 C 2/04**
**C 04 B 13/14**

(30) Priorität: 16.12.82 DE 3246534

(43) Veröffentlichungstag der Anmeldung:
27.06.84 Patentblatt 84/26

(84) Benannte Vertragsstaaten:
AT BE CH FR GB IT LI LU NL SE

(71) Anmelder: Rigips GmbH
Rühler Strasse
D-3452 Bodenwerder(DE)

(72) Erfinder: Deutsch, Peter, Dipl.-Ing.
Grüne Aue 14
D-3250 Hameln 1(DE)

(72) Erfinder: Beck, Horst
Waldstrasse 4
D-7841 Auggen(DE)

(72) Erfinder: Rennen, Heinz, Dr.
Junkergrund 25
D-3452 Bodenwerder(DE)

(72) Erfinder: Hilscher, Gerald
Bussemeyerweg 8
D-3280 Bad Pyrmont(DE)

(74) Vertreter: Rücker, Wolfgang, Dipl.-Chem.
Hubertusstrasse 2
D-3000 Hannover 1(DE)

(54) **Plattenförmiges Bauelement mit einem Gipskern und einer Kartonummantelung.**

(57) Beschrieben wird ein plattenförmiges Bauelement mit einem Gipskern und einer Kartonummantelung, wobei der Gipskern äus einer Vielzahl von Granalien besteht, die ähnlich wie bei der Gipskartonplattenherstellung auf die Rückseite des rinnenförmig gefalteten Ansichtsseitenkartons aufgetragen werden und wobei die Granalien gerade nur soviel Wasser enthalten, wie zur Rehydratisierung des Halbhydratgipses erforderlich ist und worauf diese Granalienschicht durch einen Karton abgedeckt und das Bauelement kalibriert wird; eine Trocknung im herkömmlichen Sinne ist nicht mehr erforderlich.

EP 0 111 639 A2

0111639

Beschreibung
===========

Die Erfindung betrifft ein plattenförmiges Bauelement
mit einem Gipskern und einer Kartonummantelung (Gipskartonplatte), bei der eine Kartonbahn, die die Ansichtsseite
bildet, mit Wasser angemachten, verformbaren Gips aufnimmt,
der durch einen weiteren Karton, der die Rückseite bildet,
abgedeckt ist, wobei die Ränder der Ansichtsseite über die
Rückseite gefaltet und mit dieser verklebt sind.

Gipskartonplatten gehören seit vielen Jahrzehnten
zu einem der weit verbreitesten Baumaterialien. Insbesondere
in den USA hat sich die Gipskartonplatte in ungewöhnlichem
Umfang durchgesetzt, während in der Bundesrepublik Deutschland
die Anmelderin als erste, die Entwicklung der Gipskartonplatte im Jahre 1948 begann.

Gipskartonplatten werden im kontinuierlichen Betrieb
auf großen Bandanlagen hergestellt, die als wichtigste Teile einen Kartonzulauf von unten, der die Ansichtsseite der
Platte bildet und der den zulaufenden Gips in einer aus dem
Ansichtsseitenkarton gebildeten rinnenartigen Formung des
Kartons aufnimmt, sowie die Kalibriervorrichtung, über die der
Rückseitenkarton von oben zuläuft und über den die senkrecht
hochstehenden Ränder des Ansichtsseitenkartons gefaltet werden und
der Abbindestrecke mit Schneidevorrichtung und dem Etagenofen.

Der Gips wird als breiige, mit Überschußwasser versehene Masse mit verschiedenen Zusätzen auf die Rückseite des Ansichtsseitenkartons aufgetragen und schließlich von dem Rückseitenkarton bedeckt, wobei das Abbindeverhalten des Gipskernes und die Länge und die Abbindestrecke aufeinander abgestimmt sind, so daß am Ende der Abbindestrecke das endlos erzeugte Gipskartonplattenband in einzelne endliche Plattenstücke zerschnitten, gewendet und dem Trockenofen zugeführt wird.

Es ist ferner bekannt, bei dieser Art der Herstellung der Gipskartonplatte dem Gips ein Schaummittel oder Schaum zuzumischen, um eine poröse Struktur des Gipskernes zu erhalten. Es ist auch bekannt, Fasern beispielsweise aus Glas in den Gipskern einzubetten. Die Gipskartonplatten werden meistens in einer Breite von 1,25 und einer Länge bis zu 4 m, bei einer Dicke von 9,5 - 12,5 mm gefertigt (Hanusch, Gipskartonplatten 1978, 1. Auflage und Ullmann, 3. Auflage 1953, Band 4, Seite 213).

Es ist ferner bekannt, diesen klassischen Gipskartonplattenherstellungsprozess abzuwandeln, dadurch, daß man auf die Rückseite des U-förmig aufgefalzten Ansichtsseitenkartons trockenes, pulverförmiges Calciumsulfathalbhydrat und gegebenenfalls Calciumsulfat vermittels einer Pulverstreuvorrichtung aufstreut und in den Gipsfallstrom durch eine Düse 25% Wasser und Beschleuniger beispielsweise 2% Calciumsulfat . .

auf den Gips bezogen, einsprüht. Worauf dann sofort anschließend eine zweite Kartonbahn aufgedeckt wird. Zur besseren Haftung des Kartons am Gips können die Auflageflächen des Kartons
z.B. durch Düsen vorab mit Wasser, bzw. einer Haftmittellösung
besprüht werden. Die zweite Kartonbahn wird durch Andruckwalzen angedrückt, da der Gips einen stark beschleunigenden Zusatz enthält, tritt sofortiges Abbinden ein. Nach diesem in
der DE-OS 1 571 466 beschriebenen Verfahren will man dadurch
ein schnelles Abbinden und eine Verringerung der Trocknungskosten erreichen. Außerdem eine höhere Steifigkeit, bei gleichzeitig höherer Festigkeit.

Obgleich die Gipskartonplatte in ihrer Bedeutung laufend
zugenommen hat und ein hervorragendes Bauelement, insbesondere
für den Innenbau ist, hat das klassische Herstellungsverfahren
Nachteile, da die Gipskartonplatte unter Aufwendung hoher Energiemengen getrocknet werden muß, weil der Kern aus einem Überschußwasser enthaltenden Gipsbrei besteht.

Wie oben bereits dargelegt, versucht die DE-OS 1 571 466
diese Nachteile dadurch zu beseitigen, daß man den Gips für
den Kern der Gipskartonplatte nicht in Breiform zuführt, sondern daß man den Gips trocken aufstreut und ihn während des
Fallens auf den Karton mit Wasser befeuchtet und dann die zweite Kartonbahn gleich zuführt. Dieses Verfahren hat aber keine
Bedeutung erlangt.

Es ist der auf diesem Gebiet berühmten Anmelderin nicht bekannt, daß ein solches Verfahren zu verwirklichen ist. Dies scheint daran zu liegen, daß das Bedüsen während des freien Fallens auf die Rückseite des Ansichtsseitenkartons nicht so schnell vor sich geht.

Versuche haben gezeigt, daß die gleichmäßige Durchnässung des pulverförmigen Gipses durch aufgesprühte kleine Wassertropfen ein längerer Zeitprozess ist und das Wasser oft in Nestern konzentriert bleibt, die gegeneinander durch trockenen Gips abgegrenzt sind, so daß die Festigkeiten einer solchen Platte zu wünschen übrig lassen, insbesondere bei der Bearbeitung der Platten durch Zuschneiden von Passstücken. Es können Ausbrechungen z.B. in der Schnittkante entstehen, weil dort eine vollständige Rehydratisierung des Gipses nicht eingetreten ist. Das Problem der Einsparung von Energie stellt sich aber in dieser Zeit erneut und besonders intensiv.

Es ist daher die Aufgabe der vorliegenden Erfindung eine Gipskartonplatte zu schaffen, die die Qualität der herkömmlichen Gipskartonplatte zumindest besitzt, die aber keinen so aufwendigen Trocknungsprozess zu durchlaufen braucht wie die klassischen Gipskartonplatten und die auch sonst ein schnelleres, kostengünstigeres Produktionsverfahren gestattet beispielsweise eine Verringerung der Abbindestrecke vor dem Schneiden in endliche Platten.

Erreicht wird das erfindungsgemäß durch die in den Ansprüchen gekennzeichneten Maßnahmen.

Die Herstellung der Granalien erfolgt in einer Granuliervorrichtung in an sich bekannter Weise, wobei man das zum Abbinden des Halbhydratgipses erforderliche Wasser in Abhängigkeit von dem Wasserbedarf des Gipsgemisches, welches letzlich granuliert wird, jeweils feststellt. Diese Messungen des Wasserbedarfs können kontinuierlich oder quasi kontinuierlich durchgeführt werden.

Die Wassermenge ist dabei so bemessen, daß man dem Halbhydratgips, der mit weiteren Zusätzen vermischt sein kann, gerade soviel Wasser zuführt, wie zum Abbinden, zum Dihydrat benötigt wird, eventuell mit einem geringen Überschuß.

Die Granalien werden wie bei der bekannten Gipskartonplattenherstellung auf die Rückseite des Ansichtsseitenkartons eingetragen und können falls erforderlich, darin durch eine zusätzliche Einrichtung noch verteilt werden. Auch der Rückseitenkarton wird in an sich bekannter Weise zugeführt.

Die den Gipsgranalien zugekehrten Oberflächen der Kartonbahnen und/oder die Oberfläche der verteilten Gipsgranalien sind mit einem Haftmittel vorzugsweise mit einer wässrigen Lösung, beispielsweise aus Stärke oder Dextrin in einem gesonderten Arbeitsgang vor der Zugabe der Gipsgranalien, bzw. vor der Zuführung der oberen Kartonbahn beschichtet.

0111639

Das kann durch Drucken oder auch durch Aufsprühen einer
solchen Haftmittellösung geschehen. Nachdem die Kartonbahn mit den dazwischen liegenden Granalien durch eine
oder mehrere Kalibrierwalzen hindurchgegangen sind, hat diese
diese Platte ihre endgültige Form erreicht und hat auch abgebunden, nachdem sie die Abbindestrecke bis zur Schneidevorrichtung durchlaufen hat.

Die dem zu granulierenden Halbhydratgips zuzusetzende
Wassermenge kann ein Tensid enthalten, und der Halbhydratgips
beispielsweise auch Fasern wie Glasfasern oder weitere inerte oder selbsterhärtende Zusätze, die sich natürlcih in der
Bestimmung des Bedarfs an Abbindewasser entsprechend niederschlagen.

Die erzeugten Granalien können in ihren Abmessungen
relativ stark variieren und in Anhängigkeit von der mittleren
Granaliengröße wird die Menge der zuzuführenden Granalien bestimmt. An Stelle einer Granalienform können die Gipsteilchen
auch eine andere Gestalt haben, beispielsweise die Form von
Pellets oder Kügelchen, deren Durchmesser zwischen 0,2 und
10 mm liegt.

Es können auch Gemische unterschiedlich großer Granalien und/oder Pellets eingesetzt werden. Durch die Verwendung solchen angemachten stückigen Gipses läßt sich auch eine
gewisse Porenstruktur im Gipskern herstellen, wenn die Gipskartonplatte durch die Kalibrierwalzen hindurchläuft und die
Granalien- oder Pelletmenge so bemessen ist, was sich nach
einigen Versuchen leicht feststellen läßt, daß zwischen den

**0111639**

einzelnen Teilchen Hohlräume verbleiben.

Das gewünschte Raumgewicht läßt sich ähnlich dem Fuller-Gesetz einstellen durch bestimmte Auswahl der Granalien- bzw. Pelletsdurchmesser und durch Zugabe eines Anteils feinteiligen nichtgranulierten Stuckgipses und/oder Anhydrits.

0111639

<u>Neue Patentansprüche</u>

1. Plattenförmiges Bauelement mit einem Gipskern und einer Kartonummantelung (Gipskartonplatte), bei der eine Kartonbahn, die die Ansichtsseite bildet, mit Wasser angemachten verformbaren Halbhydratgips aufnimmt, der durch einen weiteren Karton, der die Rückseite bildet, abgedeckt ist, wobei die Ränder der Ansichtsseite über die Rückseite gefaltet und mit dieser verklebt sind, <u>dadurch gekennzeichnet,</u> daß der Gipskern aus einer Vielzahl von mit der stöchiometrisch notwendigen Menge Wasser angemachten Gipsgranalien oder Gipspellets besteht.

2. Bauelement nach Anspruch 1, <u>dadurch gekennzeichnet,</u> daß die Menge des Anmachwassers durch den Hydratwasserbedarf des Gipses bestimmt ist und zur Rehydratisierung des Gipses ausreicht so daß die Platte nicht getrocknet zu werden braucht

3. Bauelement nach Anspruch 1 und 2, <u>dadurch gekennzeichnet,</u> daß das stückiggemachte Bindemittel ein Gemisch aus Calciumsulfathalbhydraten, aktiviertem Anhydrit, inerten Zuschlagstoffen, Fasern und dergleichen ist.

4. Bauelement nach Anspruch 1 - 3, <u>dadurch gekennzeichnet,</u> daß die Kartonbahnen auf der mit den Bindemitteln in Berührung kommenden Seite mit einem Haft- oder Klebemittel beschichtet sind.

5. Bauelement nach Anspruch 4, <u>dadurch gekennzeichnet,</u> daß das Haftmittel bzw. Klebemittel eine wässrige Stärke-, Dextrin- und/oder Kunstharzlösung bzw.- dispersion ist.

6. Bauelement nach Anspruch 1 - 5, <u>dadurch gekennzeichnet,</u> daß neben den Granalien und/oder Pellets ein Anteil feinteiligen nicht granulierten Stuckgipses bzw. Anhydrits zur Steuerung des Raumgewichts zugegen ist.